# EUROPÄISCHE PATENTSCHRIFT

(11) **EP 1 915 269 B1**
(45) Veröffentlichungstag und Bekanntmachung des Hinweises auf die Patenterteilung: **30.12.2009**
(21) Anmeldenummer: 06761704.3
(22) Anmeldetag: 26.06.2006
(51) Int. Cl.: B60J 7/043

(54) **FAHRZEUGDACH MIT EINEM OBERHALB DES DACHES VERSCHIEBBAREN DACHTEIL**
VEHICLE ROOF WITH A ROOF PART THAT CAN BE DISPLACED ABOVE THE ROOF
TOIT DE VEHICULE COMPORTANT UNE PARTIE DE TOIT COULISSANT AU-DESSUS DU TOIT

(30) Priorität: 27.06.2005 DE 102005030055
(43) Veröffentlichungstag der Anmeldung: 30.04.2008
(73) Patentinhaber: Webasto AG, 82131 Stockdorf (DE)
(72) Erfinder: FÄRBER, Manfred, 82407 Wielenbach (DE)
(86) Internationale Anmeldenummer: PCT/DE2006/001092
(87) Internationale Veröffentlichungsnummer: WO 2007/000146

(56) Entgegenhaltungen:
- EP-A2- 1 193 098
- EP-A2- 1 486 367
- EP-B1- 0 863 817
- US-A1- 2002 125 743

## Beschreibung

Die Erfindung betrifft ein Fahrzeugdach mit einem mit seiner Hinterkante ausstellbaren und oberhalb des Daches verschiebbaren Dachteil gemäß dem Oberbegriff des Patentanspruchs 1.

Aus der EP 1 193 098 A2 ist ein Dichtungssystem an einem öffnungsfähigen Fahrzeugdach gemäß dem Oberbegriff des Anspruchs 1 bekannt, und aus der EP 1 468 367 A2 ist ein weiteres derartiges Fahrzeugdach bekannt. Bei diesem ist eine Seitenwand des verschiebbaren Dachteils als tragende Wand ausgebildet und an ihrer Unterseite mit Gleitelementen versehen, die in die seitlichen Führungsschienen eingreifen. Die tragende Wand muss relativ stabil sein. Sie wird dem entsprechend schwer und bringt aufgrund des vorgegebenen festen Abstandes von der Oberkante des Deckels zum Gleitelement Einschränkungen bezüglich der Bewegbarkeit des Dachelements bei dessen Verschiebung in der Höhe des Fahrzeugs gesehen.

Aus der EP 0 863 817 B1 ist ein weiteres Fahrzeugdach mit einem außen geführten Dachteil bekannt. Bei diesem wird das öffnungsfähige Dachteil mittels einer hinteren Ausstellmechanik angehoben und zu Beginn der Verschiebebewegung an einen separaten Stützhebel übergeben, der in einer nach oben offenen, seitlich versetzten Verlängerung der Führungsschiene mit seinem unteren Ende verschiebbar gelagert ist. Während der Übergabe von der Ausstellmechanik an den Stützhebel sind für eine kurze Bewegungsphase beide Elemente im Eingriff, wodurch eine statische Überbestimmung entsteht. Der Antrieb erfordert in dieser Phase unter Umständen erhöhte Antriebskräfte, die auch eine Sensorik für einen Einklemmschutz negativ beeinflussen.

Aus der US 2002/0125743 A1 ist ein Fahrzeugdach bekannt, bei dem - ähnlich zur EP 1 486 367 A2 - ein außen geführtes öffnungsfähiges Dachteil mit einer sehr einfachen, starre Halter aufweisenden Mechanik geführt ist. Die Anhebung erfolgt über geneigte Rampen in den Führungsschienen, so dass die Ausstellung der Hinterkante nur gleichzeitig mit einer Verschiebung des Dachteils erfolgen kann.

Der Erfindung liegt die Aufgabe zugrunde, ein Fahrzeugdach derart weiterzuentwickeln, dass das öffnungsfähige Dachteil bei der Ausstellung und bei der Verschiebung kontinuierlich durch Ausstellhebel abgestützt wird und dennoch eine ansprechende Optik aufweist.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass die Hinterkante des ausstellbaren und verschiebbaren Dachteils in allen Bewegungspositionen kontinuierlich durch dieselben Ausstellhebel abgestützt wird, so dass keinerlei Übergabe an separate Stützhebel erfolgen muß. Die Ausstellhebel werden durch Steuerschlitten betätigt, die ausgehend von der Schließposition über die Lüfterposition bis in die vollständige Öffnungsposition in derselben Richtung verschoben werden. Die Steuerschlitten betätigen auch eine Verriegelungseinrichtung, die eine Verschiebung des Dachteils während der Ausstellbewegung blockiert, wie dies in der älteren deutschen Patentanmeldung 10 2005 007 032.9-24 beschrieben ist, deren gesamter Offenbarungsgehalt hiermit zum Inhalt der vorliegenden Anmeldung erklärt wird. Um die Sicht auf die Betätigungsmechanik und das Eindringen von Seitenwind und Schmutz zu verhindern, ist eine von der Betätigungsmechanik völlig unabhängige Seitenblende an beiden Seitenkanten des bewegbaren Dachteils vorgesehen, die sich stets mit ihrer Außenseite in Anlage an einer Dichtung befindet, die den äußeren Rand des Führungskanals am festen Fahrzeugdach abdichtet. Da die Seitenblende im Gegensatz zum Stand der Technik keine tragende Funktion hat, kann sie so schmal ausgeführt sein und mit der Ausstell- und Verschiebemechanik so abgestimmt sein, dass sie sich gegenseitig in keiner Weise behindern oder zusätzlichen Bauraum verursachen.

Gemäß einer vorteilhaften Ausführungsform ist an dem hinter der Dachöffnung angeordneten, zumindest zeitweise festen Dachteil im seitlichen Randbereich eine weitere Dichtung angeordnet, an der die Seitenblende bei einer Verschiebung des Dachteils nach hinten mit ihrer Innenseite anliegt.

Besonders vorteilhaft ist eine Ausführungsform, bei der der Ausstellhebel unmittelbar neben der Innenseite der Seitenblende angeordnet ist.

Gemäß einer weiteren vorteilhaften Ausführungsform ist das öffnungsfähige Dachteil für eine Anhebung seiner Vorderkante an einem vorderen Ausstellhebel zumindest schwenkbar angelenkt, wobei dieser Ausstellhebel unmittelbar neben der Innenseite der Seitenblende angeordnet ist.

Das bewegbare Dachteil wird bevorzugt von einer Glasplatte und einer die Glasplatte umgebenden Umspritzung in Form eines Kunststoffrahmens gebildet. In diesem Fall ist die Seitenblende bevorzugt einstückig mit der Umspritzung ausgebildet, d.h. sie wird bevorzugt bei der Herstellung der Umspritzung mit in der Form erzeugt oder als Formteil beim Umspritzen in die Form eingelegt und dadurch in die Umspritzung eingebettet.

Die Seitenblende weist in ihrem vorderen Bereich bevorzugt eine schräg nach hinten abfallende Unterkante auf, wodurch der beanspruchte Bauraum bei der Schwenkbewegung zur Ausstellung der Hinterkante des bewegbaren Dachteils reduziert wird.

Die Seitenblende weist in ihrem hinteren Bereich bevorzugt eine Rundung an ihrer Unterkante auf, wodurch die Schwenkbewegung zum Ausstellen der Hinterkante gegenüber dem dahinter angeordneten Dachteil erleichtert wird.

Der Steuerschlitten ist über eine Anbindung mit einem Antriebskabel verbunden, das in einem seitlichen Kabelkanal der Führungsschiene geführt ist. Diese Anbindung, die das Antriebskabel mit dem Steuerschlitten verbindet, ist unter der Seitenblende durchgeführt. Bevorzugt weist die Anbindung eine U-Form auf.

Die Erfindung eignet sich insbesondere für ein außen geführtes Schiebedach (ASD). Dieses kann auch vorteilhaft Bestandteil eines sogenannten Festelement-Cabriolets sein, bei dem eine Schiebedachfunktion zunächst eine Teilöffnung des Daches ermöglicht, bevor das gesamte Dach in einen Stauraum bewegt wird und dadurch den gesamten Innenraum des Fahrzeugs nach oben freigibt.

Nachfolgend wird das Fahrzeugdach anhand eines Ausführungsbeispiels unter Bezugnahme auf die Zeichnung näher erläutert. Es zeigt:
- Fig. 1: eine schematische Seitenansicht eines Fahrzeugdachs mit einem hinte- ren festen Dachteil und einem bewegbaren vorderen Dachteil in ausge- stellter Lüfterposition;
- Fig. 2: eine schematische Seitenansicht des Fahrzeugdachs gemäß Fig. 1 mit geöffnetem vorderen Dachteil;
- Fig. 3: einen Querschnitt durch den vorderen linken Teil der Mechanik des be- wegbaren Dachteils gemäß der Schnittlinie III-III in Figur 1;
- Fig. 4: einen Querschnitt durch den hinteren linken Teil der Mechanik des be- wegbaren Dachteils gemäß der Schnittlinie IV-IV in Figur 1;
- Fig. 5: einen Querschnitt durch den vorderen linken Teil der Mechanik des be- wegbaren Dachteils in vollständig geöffneter Position gemäß der Schnittlinie V-V in Figur 2;
- Fig. 6: eine perspektivische Darstellung des linken Teils der Mechanik des be- wegbaren Dachteils; und
- Fig. 7: eine perspektivische Darstellung des linken Teils der Mechanik des be- wegbaren Dachteils mit vier darin eingebetteten Querschnitten durch die Führungsschiene.

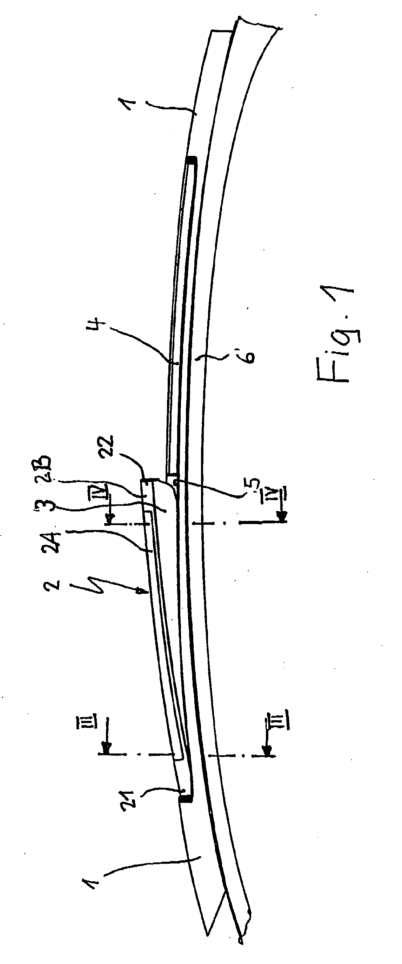

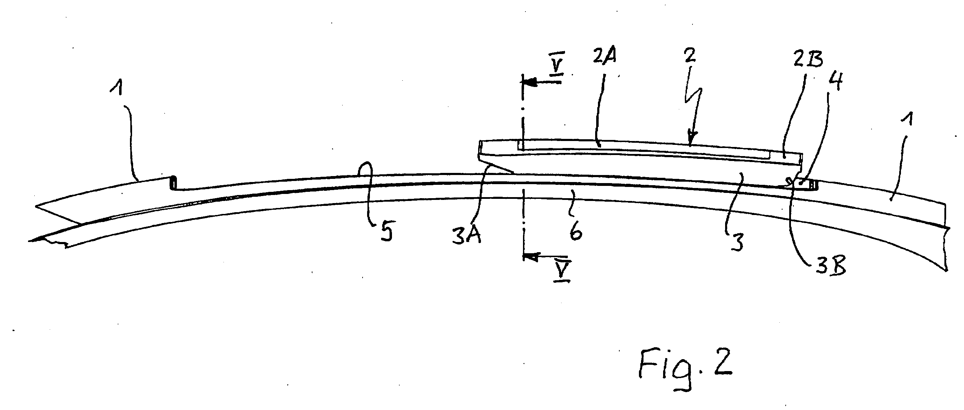

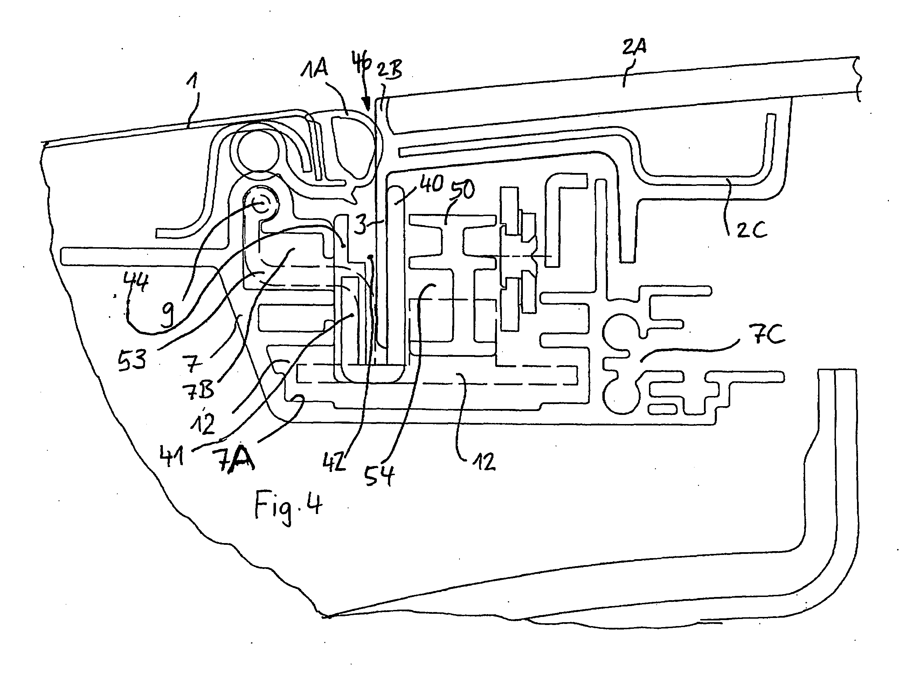

Das in Fig. 1 und 2 gezeigte Fahrzeugdach 1 weist von vorne nach hinten hintereinander liegend ein an einen Windlauf oberhalb der Frontscheibe anschließendes bewegbares Dachteil 2 und ein hinteres festes Dachteil 4 auf. Das bewegbare Dachteil 2 wird bevorzugt von einer Glasscheibe 2 A (alternativ von einer transparenten Kunststoffscheibe) und einer die Glasscheibe 2 A umgebenden Umspritzung 2 B in Form eines Kunststoffrahmens gebildet. Das bewegbare Dachteil 2 ist mittels einer im folgenden beschriebenen Mechanik mit seiner Hinterkante in eine Lüfterposition (Figur 1) ausstellbar und ausgehend von dieser über das feste Dachteil 4 nach hinten verschiebbar (Figur 2), wobei eine Dachöffnung 5 weitestgehend freigelegt wird und wobei das bewegbare Dachteil 2 im Unterschied zu herkömmlichen, auch als Spoilerdächern bezeichneten Hebe-Schiebedächern auch bei seiner Verschiebung nach hinten stets nahe seiner Hinterkante 22 abgestützt wird. Solche aus der eingangs genannten EP 0 863 817 B1 bekannten öffnungsfähigen Fahrzeugdächer werden als außengeführte Schiebedächer (ASD) bezeichnet, da ein die Hinterkante 22 des Dachteils 2 abstützender Teil der Mechanik - hier ein Ausstellhebel 40 - in einer zur Oberseite des Fahrzeugdachs 1 offenen Führung 46 (Figur 4) auch bei einer Verschiebung hinter die Dachöffnung 5 verschiebbar und damit jederzeit stabil abgestützt wird. Die Führung 46 wird nach oben durch eine Dichtung 1 A am Seitenrand des festen Fahrzeugdachs 1 und hinten zusätzlich durch eine Dichtung 4 A am Außenrand des hinteren festen Dachteils 4 abgedeckt, die dem Ausstellhebel 40 beim Verfahren nach hinten ausweichen.

An beiden Seitenrändern des bewegbaren Dachteils 2 ist jeweils eine Seitenblende 3 vorgesehen, die bevorzugt einstückig mit der Umspritzung 2 B ausgebildet ist. Dies kann zum einen dadurch realisiert werden, dass die Seitenblende 3 in der Form für die Umspritzung 2 B als Hohlraum mit ausgebildet ist oder dadurch, dass ein die Seitenblende 3 bildendes Formteil vor dem Umspritzen in die Form des Kunststoffrahmens der Umspritzung 2 B eingelegt wird. Es ist aber auch möglich, eine Seitenblende 3 als separates Bauteil auszubilden und an der Umspritzung 2 B oder an einem Verstärkungsblech 2 C des bewegbaren Dachteils 2 zu befestigen. Die Seitenblende 3 dient der seitlichen Verblendung der Ausstell- und Verschiebemechanik in allen Betriebspositionen des bewegbaren Dachteils 2. Sie verhindert ferner das Eindringen von Seitenwind oder Schmutz in den Innenraum oder in die Führungsschiene 7. Die Seitenblende 3 ist völlig unabhängig von der Ausstell- und Verschiebemechanik des Dachteils 2.

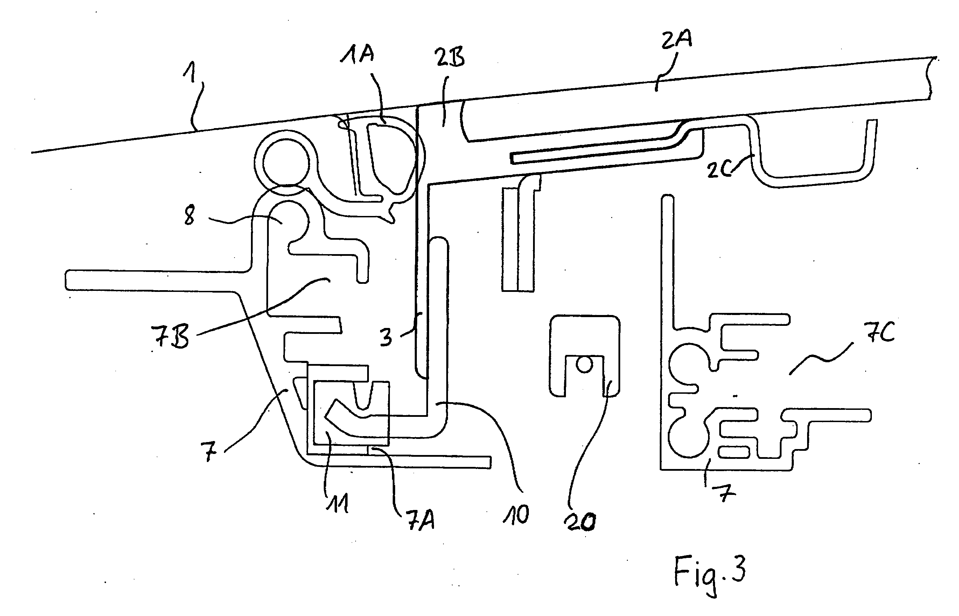

In Fig. 3 ist ein seitlicher Schenkel eines konventionellen Windabweisers 20 angedeutet, der bei geschlossenem Dach am vorderen Rand der Dachöffnung 5 unterhalb des bewegbaren Dachteils 2 liegt und erst bei nach hinten verschobenem Dachteil 2 bevorzugt federbelastet in seine Wirkstellung nach oben schwenkt. Alternativ zu diesem Windabweiser 20 kann vor dem bewegbaren Dachteil 2 auch eine ausstellbare Windabweislamelle angeordnet sein.

Die Dachöffnung 5 wird seitlich begrenzt von seitlichen Dachholmen 6. Diese können Bestandteil des festen Fahrzeugdachs 1 sein. Sie können jedoch auch bei einem Festelementcabrio am hinteren Dachteil 4 beweglich angeordnet sein und nach dem Verfahren des bewegbaren Dachteils 2 über das Dachteil 4 vom vorderen Bereich des festen Fahrzeugdachs 1 gelöst und beispielsweise nach Anschwenken an das Dachteil 4 mit dem gesamten Dachpaket in einen Stauraum versenkt werden.

Am festen Fahrzeugdach 1 bzw. an den seitlichen Dachholmen 6 ist jeweils eine Führungsschiene 7 angeordnet, die sich sowohl seitwärts der Dachöffnung 5 als auch hinter die Dachöffnung 5 in das Dachteil 4 hinein bzw. zwischen diesem und dem seitlichen Dachholm 6 erstreckt, wo sie die Führung 46 für die untere Abstützung des Ausstellhebels 40 bei der Verschiebung des Dachteils 2 über das Dachteil 4 bildet. In den Führungsschienen 7 ist jeweils ein Kabelkanal 8 ausgebildet, in dem ein zug- und druckfestes Antriebskabel 9 geführt ist, das mit einem nicht dargestellten elektrischen Antrieb verbunden ist. In den Fig. 3 bis 7 ist jeweils nur eine Führungsschiene 7 auf der linken Seite des Fahrzeugs mit der zugehörigen Mechanik dargestellt. Alle Teile sind jedoch spiegelbildlich zu einer Mittellängsachse auf beiden Seiten der Dachöffnung 5 vorhanden.

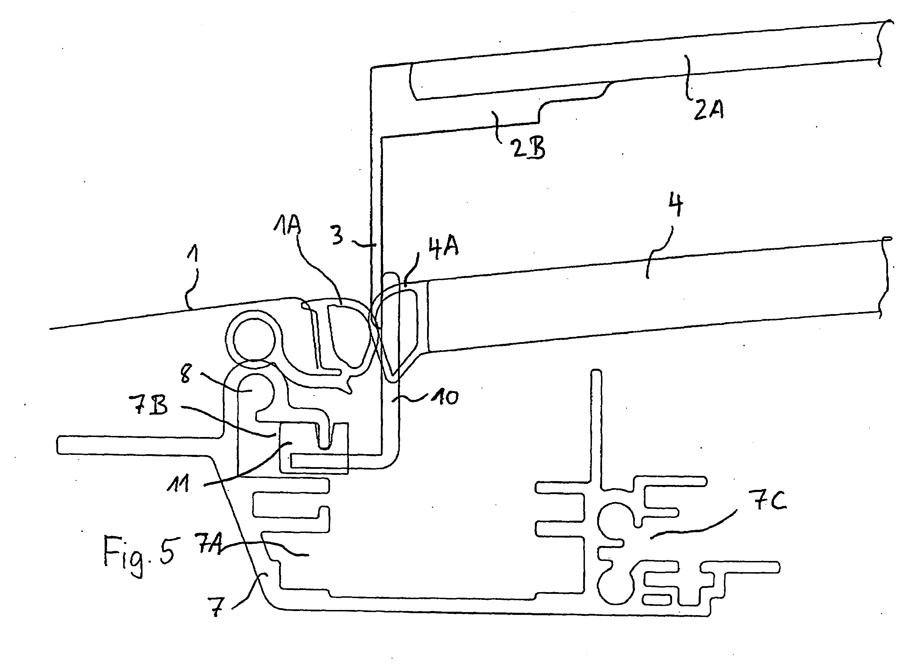

Das bewegbare Dachteil 2 ist nahe seiner Vorderkante 21 mit einem über ein vorderes Gleitelement 11 verschiebbar in der Führungsschiene 7 gelagerten vorderen Ausstellhebel 10 verbunden. Der vordere Ausstellhebel 10 ist mit dem vorderen Gleitelement 11 je nach Position in verschiedenen Führungsbahnen 7 A (Figur 3) oder 7B (Figur 5) der Führungsschiene 7 verschiebbar geführt. Die Führungsbahnen 7 A und 7 B sind im vorderen Bereich der Führungsschiene 7 durch eine ansteigende Rampe miteinander verbunden.

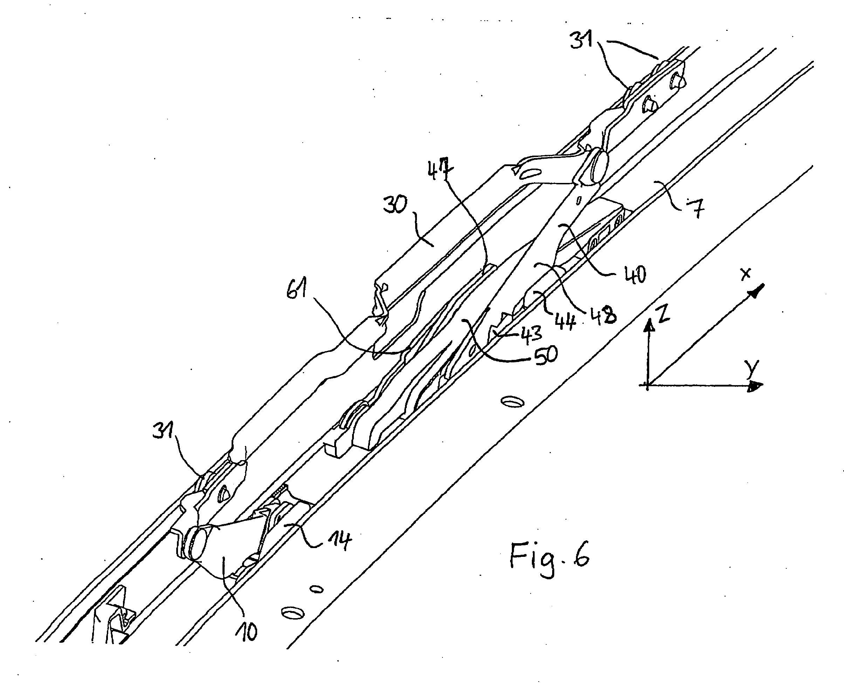

Nahe dem hinteren Ende 22 des bewegbaren Dachteils 2 ist ein Ausstellhebel 40 mit einem Gelenk an einem mit dem Dachteil 2 über mehrere Befestigungspunkte 31 verbundenen Deckelträger 30 und einer daran befestigten hinteren Anlenkung schwenkbar angelenkt. Wie am besten in Fig. 6 zu erkennen, ist der Ausstellhebel 40 in seinem vorderen Bereich zweiteilig ausgebildet: ein äußerer Schenkel 48 und ein mit diesem verbundener innerer Schenkel 47 umgreifen von unten her einen Steuerschlitten 50 im Bereich einer nach oben gewölbten bogenförmigen Steuerkulisse 54 (Figur 4). Die Steuerkulisse 54 ist an der Außenseite des Steuerschlittens 50 in dessen hinterem Bereich vorgesehen. In die Steuerkulisse 54 greift der Ausstellhebel 40 mit einem vorderen Gleitelement und einem etwa in der Mitte des Ausstellhebels 40 an dessen Unterseite angeordneten hinteren Gleitelement ein. Eine in der Form zur Steuerkulisse 54 identische Steuerkulisse ist vorzugsweise auch auf der Innenseite des Steuerschlittens 50 in dessen hinterem Bereich in derselben Höhe in X-Richtung und in Z-Richtung gesehen ausgebildet. Das im Fahrzeugbau übliche Koordinatensystem ist in Fig. 6 angedeutet. Die X-Richtung wird parallel zur Fahrzeuglängsachse, die Y-Richtung parallel zur Fahrzeugquerachse und die Z-Richtung parallel zur Fahrzeughochachse festgelegt. In diese nach innen geöffnete Steuerkulisse greifen spiegelbildlich zum vorderen Gleitelement und zum hinteren Gleitelement angeordnete Gleitelemente am inneren Schenkel 47 des Ausstellhebels 40 ein. Der Eingriff von jeweils zwei Gleitelementen in die Steuerkulissen 54 am Steuerschlitten 50 gewährleistet eine symmetrische Krafteinleitung und eine besonders stabile Abstützung des bewegbaren Dachteils 2. Die Funktion wäre aber auch durch einen einfachen Ausstellhebel 40 gewährleistet, der nur mit zwei Gleitelementen auf einer Seite in eine Steuerkulisse 54 eingreift.

Der Steuerschlitten 50 ist mit einem Paar vorderer Gleitelemente und einem Paar hinterer Gleitelemente 12 (Figur 4) in einer Führungsbahn 7 B der Führungsschiene 7 verschiebbar gelagert. In Höhe des hinteren Gleitelements 12 ist gleichzeitig an der Außenseite eine Anbindung 53 zum Antriebskabel 9 vorgesehen. Der nicht dargestellten Antriebsmotor betätigt somit das bewegbare Dachteil 2 ausschließlich über eine Verschiebung des Steuerschlittens 50. Am Steuerschlitten 50 ist in dessen vorderem Bereich zur Innenseite hin geöffnet eine weitere Kulisse angeordnet. Ferner ist im vorderen Bereich des Steuerschlittens 50 ein nach außen weisender Steuerstift vorgesehen. Die weitere Kulisse dient zur Betätigung einer Verriegelungseinrichtung, die von einem parallel zum inneren Schenkel 41 des Ausstellhebels 40 und des Steuerschlittens 50 angeordneten Verriegelungshebel 61 (Fig. 6) gebildet wird, der an seinem hinteren Ende mit einem Gelenk am inneren Schenkel 41 des Ausstellhebels 40 schwenkbar gelagert ist und der an seinem vorderen Ende an der Innenseite, d. h. der Dachöffnung 5 zugewandt, einen Verriegelungsbolzen und an der Außenseite einen Steuerstift trägt, wobei der Steuerstift gegenüber dem Verriegelungsbolzen leicht nach unten und hinten versetzt ist.

Der Verriegelungsbolzen greift in eine an der Innenseite der Führungsschiene 7 vorgesehene Kulisse ein, die von vorne nach hinten einen zunächst schräg abfallenden Verlauf aufweist, der dann in eine horizontale Führungsbahn der Führungsschiene 7 übergeht.

Der Steuerstift greift in die weitere Kulisse am Steuerschlitten 50 ein. Da in der vorliegenden Anmeldung nicht alle Einzelheiten der Ausstell- und Verschiebemechanik und der Verriegelungseinrichtung dargestellt sind, wird wegen weiterer Details auf die bereits eingangs genannte ältere deutsche Patentanmeldung 10 2005 007 032 verwiesen.

Die erfindungsgemäß bei einem außengeführten Schiebedach (ASD) erstmals vorgesehene, von der Ausstell- und Verschiebemechanik unabhängige Seitenblende 3 ist so angeordnet, dass sie in allen Betriebspositionen mit ihrer Außenseite dichtend an der Dichtung 1A am Seitenrand der Dachöffnung 5 beziehungsweise im hinteren Teil am Seitenrand des festen Fahrzeugdachs 1 im Bereich des Seitenholms 6 anliegt (Figur 3 und 4). Im hinteren Teil liegt sie zusätzlich mit ihrer Innenseite an einer Dichtung 4 A an, die am Seitenrand des zumindest zeitweise festen Dachteils 4 angeordnet ist (Figur 5). Die Mechanik zum Ausstellen und Verschieben des bewegbaren Dachteils 2 und die Seitenblende 3 sind so aufeinander abgestimmt, dass sich die Seitenblende von außen nahezu spielfrei an den vorderen Ausstellhebel 10 (Figur 3 und 5) und an den hinteren Ausstellhebel 40 (Figur 4) anlegt. Wie in Figur 4 zu erkennen, ist auch die Anbindung 53 zwischen Antriebskabel 9 und den hinteren Gleitelementen 12 des Steuerschlittens 50 so ausgelegt, dass sie U-förmig unter der Seitenblende 3 hindurch geht. Die Mechanik ermöglicht somit eine in ihrer Höhe über die gesamte Länge gleichmäßige Seitenblende 3. Wie in Figur 2 zu erkennen bestehen Ausnahmen hiervon lediglich im vorderen Teil und im hinteren Teil. Im vorderen Bereich ist die Unterkante 3 A der Seitenblende 3 schräg nach hinten abfallend ausgebildet, so dass bei einer Schwenkbewegung der Hinterkante 22 des Dachteils 2 in eine Lüfterposition (Figur 1) vorne durch die Seitenblende keine zusätzliche Bauhöhe beansprucht wird. Im hinteren Bereich ist an der Unterkante der Seitenblende 3 eine Rundung 3 B vorgesehen, so dass die Hinterkante 22 des bewegbaren Dachteils 2 leicht an der Vorderkante des festen Dachteils 4 vorbei schwenken kann.

Nachfolgend wird die Funktion der vorstehend beschriebenen Mechanik ausgehend von der Schließposition beschrieben.

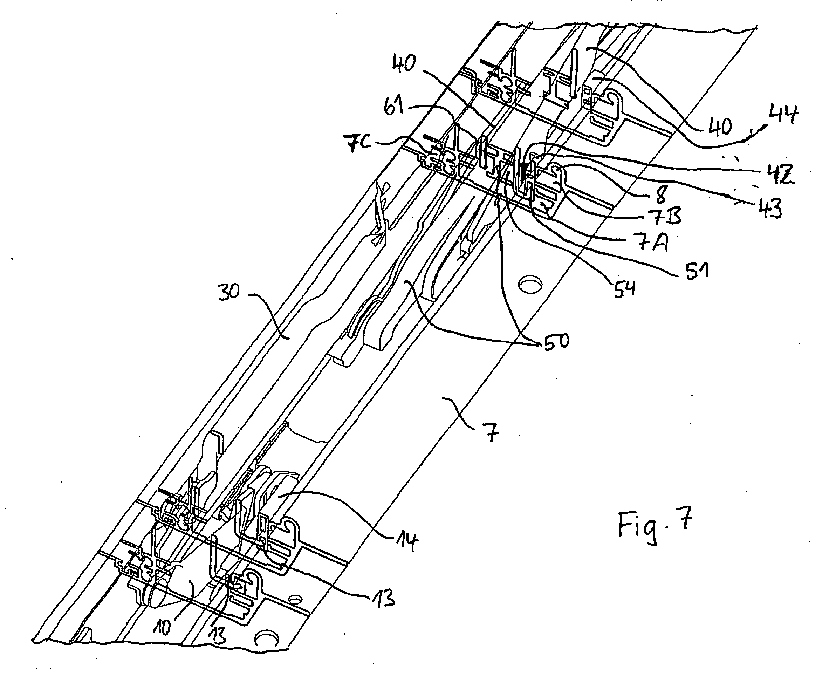

In der Schließposition wird das öffnungsfähige Dachteil 2 in bündiger Lage mit dem festen Fahrzeugdach 1 und dem hinteren Dachteil 4 in der Dachöffnung 5 gehalten. Dabei wird das Dachteil 2 nahe seiner Vorderkante 21 über den vorderen Ausstellhebel 10 gehalten. Der vordere Ausstellhebel 10 wird seinerseits über den in Figur 7 angedeuteten Steg 13 und die daran angeordnete Kunststoff-Anspritzung 14 in Verbindung mit dem vorderen Gleitelement 11 in Y-Richtung und in Z-Richtung gehalten und auch in X-Richtung gesichert.

Das hintere Ende des Dachteils 2 wird über den Ausstellhebel 40, dessen Gleitelemente in Eingriff mit der Steuerkulisse 54 des Steuerschlittens 50 stehen, und zusätzlich durch den in Figur 7 angedeuteten parallel am Ausstellhebel 40 angeordneten Steg 41 mit den daran angeordneten Kunststoff-Anspritzungen 43 beziehungsweise 44 in Y-Richtung und in Z-Richtung gehalten und durch den Eingriff des nicht dargestellten Verriegelungsbolzens in die Verriegelungskulisse an der Führungsschiene in X-Richtung gesichert.

Die Öffnungsbewegung des Deckels 2 beginnt mit einer Ausstellbewegung der Hinterkante 22. Dazu bewegt der nicht dargestellte Antriebsmotor das Antriebskabel 9 nach hinten. Über die Kabelanbindung 53 wird dabei der Steuerschlitten 50 um denselben Betrag nach hinten verschoben. Dabei bewegt sich die Steuerkulisse 54 relativ zu den Gleitelementen des Ausstellhebels 40 von der geschlossenen in die in Fig. 1 dargestellte Lüftungsposition. Während das vordere Gleitelement des Ausstellhebels 40 in der Schließposition im oberen Bereich und das hintere Gleitelement des Ausstellhebels 40 am hinteren unteren Übergang der bogenförmigen Steuerkulisse 54 liegt, hat sich das vordere Gleitelement des Ausstellhebels 40 in der Ausstellposition der Hinterkante 22 des Dachteils 2 in den unteren vorderen Übergangsbereich und das hintere Gleitelement des Ausstellhebels 40 in den oberen mittleren Bereich der Steuerkulisse 54 bewegt. Dadurch wird dem Steuerhebel 40 eine Schwenkbewegung im Gegenuhrzeigersinn aufgezwungen, die zu der in Fig. 1 gezeigten Ausstellposition des Dachteils 2 führt. Gleichzeitig ist durch den Eingriff des Steuerstifts in die weitere Kulisse der Verriegelungsbolzen im schräg abfallenden Teil seiner zugeordneten Kulisse etwas nach hinten und unten geführt worden, ohne jedoch bereits in die horizontale Führungsbahn der Führungsschiene 7 eingetreten zu sein. Dadurch sichert der nicht dargestellte Verriegelungsbolzen mittels des Verriegelungshebels 61 den Ausstellhebel 40 in dessen Ausstellposition noch gegen eine Verschiebung nach hinten.

Zur vollständigen Öffnung des Dachteils 2 wird der Steuerschlitten 50 durch das Antriebskabel 9 aus der Ausstellposition weiter nach hinten verschoben. Dabei wird der Verriegelungsbolzen durch die Führung des Steuerstifts in der weiteren Kulisse in den horizontalen Abschnitt der zugeordneten Kulisse überführt.

In der Endposition (Fig. 2) ist die Dachöffnung 5 weitestgehend freigelegt. Der Ausstellhebel 10 nahe der Vorderkante 21 des bewegbaren Dachteils 2 steht unmittelbar vor dem hinteren Dachteil 4. Er kann zur vollständigen Öffnung des Dachteils 2 auch noch weiter nach hinten neben den vorderen Bereich des hinteren Dachteils 4 fahren. Die Schließbewegung des bewegbaren Dachteils 2 erfolgt genau in umgekehrter Reihenfolge zu der vorstehend beschriebenen Abfolge.

Vorteilhaft an der vorstehend beschriebenen Mechanik für ein außen geführtes Schiebedach ist, dass der Antrieb von der Schließposition über die Ausstellposition der Hinterkante bis zur vollständigen Öffnungsposition über einen einzigen Steuerschlitten 50 in derselben Richtung erfolgt. Alle dazu erforderlichen zeitweisen Verriegelungen des vorderen Schlittens 10 und des Ausstellhebels 40 gegen eine vorzeitige Verschiebung werden unmittelbar oder mittelbar von diesem Steuerschlitten 50 gesteuert. Die Mechanik baut gegenüber dem eingangs gewürdigten Stand der Technik deutlich kleiner. In X-Richtung wird auf jeder Seite eine einzige durchgehende Führungsschiene 7 verwendet, die in die hintere Führung 46 für die Abstützung des Ausstellhebels 40 übergeht. Dadurch ist die Breite der Mechanik in Y-Richtung ebenfalls deutlich reduziert. Auch bezüglich der Höhe (Z-Richtung) ist die vorstehend beschriebene Mechanik auf ein Minimum reduziert. Die flache bogenförmige Kulisse 54 des Steuerschlittens 50 erfordert minimale Antriebskräfte zur Erzeugung der Ausstellbewegung für den Ausstellhebel 40. Es ist eine kontinuierliche ruckfreie Betätigung des bewegbaren Dachteils 2 gewährleistet, die auch ein unmittelbares Durchfahren von der Schließposition über die Lüftungsposition in die vollständige Öffnungsposition ermöglicht, ohne dass dabei hohe und sprunghafte Antriebskräfte notwendig wären, die einen Einklemmschutzsensor täuschen könnten. Die durchgehende Seitenblende 3 verdeckt in allen Betriebsphasen den seitlichen Einblick auf die Mechanik und schafft ein optisch ansprechendes Erscheinungsbild, ohne die Mechanik zu beeinträchtigen oder einen erhöhten Bauraum zu verursachen. Da sie keine tragende Funktion zu erfüllen hat, kann die Seitenblende 3 sehr schmal ausgebildet sein. Sie wird in Figur 7 von dem schmalen Spalt 42 zwischen der Außenseite des äußeren Schenkels 48 des Ausstellhebels 40 und dem an diesem nach außen angeformten Steg 41 aufgenommen, der die zusätzlichen Kunststoff-Anspritzungen 43 und 44 zur zusätzlichen Abstützung in Y-Richtung trägt.

Im vorderen Bereich wird die Seitenblende 3 von dem schmalen Spalt zwischen dem vorderen Ausstellhebel 10 und dem daran nach außen angeformten parallelen Steg 13 gebildet, an dem ebenfalls eine zusätzliche Kunststoff-Anspritzung 14 für eine zusätzliche Abstützung der Mechanik und somit des verschiebbaren Dachteils 2 in Y-Richtung angeformt sind.

### Bezugszeichenliste

- 1: Fahrzeugdach
- 1 A: Dichtung (an 1)
- 2: (bewegbares) Dachteil
- 2 A: Glasplatte
- 2 B: Umspritzung
- 2 C: Verstärkungsblech
- 3: Seitenblende
- 4: (festes) Dachteil
- 4 A: Dichtung (an 4)
- 5: Dachöffnung
- 6: (seitlicher) Dachholm
- 7: Führungsschiene
- 7 A: erster Führungskanal (an 7)
- 7 B: zweiter Führungskanal (an 7)
- 7 C: dritter Führungskanal (an 7, für Rollo)
- 8: Kabelkanal
- 9: Antriebskabel
- 10: (vorderer) Ausstellhebel
- 11: (vorderes) Gleitelement
- 12: (hinteres) Gleitelement
- 13: Steg
- 14: Kunststoff-Anspritzung
- 20: Windabweiser
- 21: Vorderkante (von 2)
- 22: Hinterkante (von 2)
- 30: Deckelträger
- 40: Ausstellhebel
- 41: Steg
- 42: Spalt
- 43: Kunststoff-Anspritzung
- 44: Kunststoff-Anspritzung
- 46: Führung
- 47: innerer Schenkel (von 40)
- 48: äußerer Schenkel (von 40)
- 50: Steuerschlitten
- 53: Anbindung zum Antriebskabel
- 54: Steuerkulisse (für 40)
- 61: Verriegelungshebel

## Patentansprüche

1. Fahrzeugdach (1) mit einem bewegbaren Dachteil (2), das mittels eines nahe seiner Hinterkante (22) angelenkten Ausstellhebels (40) zunächst in eine Lüfterposition ausstellbar und anschließend oberhalb des Fahrzeugdachs bzw. eines zumindest zeitweise festen Dachteils (4) zum wenigstens teilweisen Freigeben einer Dachöffnung (5) im Fahrzeugdach (1) verschiebbar ist, wobei das bewegbare Dachteil (2) beim Verschieben aus der Lüfterposition nach hinten im Bereich seiner Hinterkante (22) kontinuierlich weiterhin abgestützt ist und wobei das bewegbare Dachteil (2) im Bereich seiner seitlichen Kanten je eine Seitenblende (3) aufweist, **dadurch gekennzeichnet, dass** die Abstützung der Hinterkante (22) des bewegbaren Dachteils (2) sowohl bei der Ausstellbewegung als auch bei der Verschiebebewegung kontinuierlich mittels eines Ausstellhebels (40) erfolgt, und dass die von der Abstützung des bewegbaren Dachteils (2) unabhängige Seitenblende (3) sowohl bei der Ausstellbewegung als auch bei der Verschiebebewegung kontinuierlich an einer am Rand der Dachöffnung (5) bzw. nahe dem oberen Ende einer Führungsschiene (7) angeordneten Dichtung (1 A) anliegt.

2. Fahrzeugdach nach Anspruch 1, **dadurch gekennzeichnet, dass** das zumindest zeitweise feste Dachteil (4) im seitlichen Randbereich eine Dichtung (4 A) aufweist, an der die Seitenblende (3) bei einer Verschiebung des Dachteils (2) nach hinten mit ihrer Innenseite anliegt.

3. Fahrzeugdach nach Anspruch 1 oder 2, **dadurch gekennzeichnet, dass** der Ausstellhebel (40) unmittelbar neben der Innenseite der Seitenblende (3) angeordnet ist.

4. Fahrzeugdach nach einem der vorhergehenden Ansprüche, **dadurch gekennzeichnet, dass** das öffnungsfähige Dachteil (2) für eine Anhebung seiner Vorderkante (21) an einem vorderen Ausstellhebel (10) schwenkbar angelenkt ist, wobei der Ausstellhebel (10) unmittelbar neben der Innenseite der Seitenblende (3) angeordnet ist.

5. Fahrzeugdach nach einem der vorhergehenden Ansprüche, **dadurch gekennzeichnet, dass** das bewegbare Dachteil (2) von einer Glasplatte (2 A) und einer die Glasplatte (2 A) umgebenden Umspritzung (2 B) in Form eines Kunststoffrahmens gebildet ist, und die Seitenblende (3) einstückig mit der Umspritzung (2 B) ausgebildet oder als Formteil mit in diese eingebettet ist.

6. Fahrzeugdach nach einem der vorhergehenden Ansprüche, **dadurch gekennzeichnet, dass** die Seitenblende (3) in ihrem vorderen Bereich eine schräg nach hinten abfallende Unterkante (3 A) aufweist.

7. Fahrzeugdach nach einem der vorhergehenden Ansprüche, **dadurch gekennzeichnet, dass** die Seitenblende (3) in ihrem hinteren Bereich eine Rundung (3 B) an ihrer Unterkante aufweist.

8. Fahrzeugdach nach einem der vorhergehenden Ansprüche, **dadurch gekennzeichnet, dass** der hintere Ausstellhebel (40) mittels eines wenigstens eine Steuerkulisse (54) aufweisenden, in der Führungsschiene (7) verschiebbaren Steuerschlittens (50) betätigbar ist, wobei der Steuerschlitten (50) mit einem Antriebskabel (9) verbunden ist und eine Anbindung (53) zwischen einem das Antriebskabel (9) führenden Kabelkanal (8) der Führungsschiene (7) und dem Steuerschlitten (50) unter der Seitenblende (3) durchgeführt ist.

9. Fahrzeugdach nach einem der vorhergehenden Ansprüche, **dadurch gekennzeichnet, dass** der Steuerschlitten (50) ausgehend von der Schließposition über die Lüfterposition bis zur vollständigen Öffnungsposition in derselben Richtung verschiebbar ist.

10. Fahrzeugdach nach einem der vorhergehenden Ansprüche, **dadurch gekennzeichnet, dass** das bewegbare Dachteil (3) Bestandteil eines Festelement-Cabriolets ist, das zur vollständigen Freigabe des Fahrzeuginnenraums in eine Ablageposition verschwenkbar und/oder verfahrbar ist.

## Claims

1. Vehicle roof (1) having a movable roof part (2) which, by means of a setting-out lever (4) articulatedly connected close to its rear edge (22), can firstly be set out into a ventilation position and can subsequently be displaced above the vehicle roof, or above a roof part (4) which is fixed at least at times, in order to at least partially open a roof opening (5) in the vehicle roof (1), with the movable roof part (2) being continuously further supported in the region of its rear edge (22) as it is displaced rearward from the ventilation position, and with the movable roof part (2) having in each case one side screen (3) in the region of its lateral edges, **characterized in that** the support of the rear edge (22) of the movable roof part (2) takes place continuously, both during the setting-out movement and also during the displacement movement, by means of a setting-out lever (40), and **in that** the side screen (3), which is independent of the support of the movable roof part (2), bears continuously, both during the setting-out movement and also during the displacement movement, against a seal (1 A) which is arranged on the edge of the roof opening (5) or close to the upper end of a guide rail (7).

2. Vehicle roof according to Claim 1, **characterized in that** the roof part (4) which is fixed at least at times has, in the lateral edge region, a seal (4 A) against which the side screen (3) bears with its inner side during a displacement of the roof part (2) rearward.

3. Vehicle roof according to Claim 1 or 2, **characterized in that** the setting-out lever (40) is arranged directly adjacent to the inner side of the side screen (3).

4. Vehicle roof according to one of the preceding claims, **characterized in that** the openable roof part (2), for the lifting of its front edge (21), is pivotably articulatedly connected to a front setting-out lever (10), with the setting-out lever (10) being arranged directly adjacent to the inner side of the side screen (3).

5. Vehicle roof according to one of the preceding claims, **characterized in that** the movable roof part (2) is formed by a glass plate (2 A) and an extrusion coating (2 B), which surrounds the glass plate (2 A), in the form of a plastic frame, and the side screen (3) is formed in one piece with the extrusion coating (2 B) or is embedded into the latter as a molded part.

6. Vehicle roof according to one of the preceding claims, **characterized in that** the side screen (3) has, in its front region, a lower edge (3 A) which falls obliquely in the rearward direction.

7. Vehicle roof according to one of the preceding claims, **characterized in that** the side screen (3) has, in its rear region, a rounding (3 B) on its lower edge.

8. Vehicle roof according to one of the preceding claims, **characterized in that** the rear setting-out lever (40) can be actuated by means of a control carriage (50) which has at least one control slot (54) and which is displaceable in the guide rail (7), with the control carriage (50) being connected to a drive cable (9), and a connection (53) between a cable channel (8), which guides the drive cable (9), of the guide rail (7) and the control carriage (50) being led through below the side screen (3).

9. Vehicle roof according to one of the preceding claims, **characterized in that** the control carriage (50) can be displaced from the closed position via the ventilation position to the fully-open position in the same direction.

10. Vehicle roof according to one of the preceding claims, **characterized in that** the movable roof part (2) is a constituent part of a fixed-element cabriolet which, in order to fully open the vehicle interior space, can be pivoted and/or displaced into a storage position.

## Revendications

1. Toit de véhicule (1) pourvu d'une partie de toit (2) mobile qui peut être orientée d'abord dans une position d'aération à l'aide d'un levier d'orientation (40) articulé au niveau de son arête arrière (22) puis déplacée au-dessus du toit de véhicule et/ou d'au moins une partie de toit (4) temporairement fixe pour libérer au moins en partie une ouverture de toit (5) dans le toit de véhicule (1), la partie de toit (2) étant en outre soutenue en continu en cas de déplacement hors de la position d'aération vers l'arrière dans la zone de son arête arrière (22) et la partie de toit (2) mobile présentant respectivement un cache latéral (3) dans la zone de ses arêtes latérales, **caractérisé en ce que** le soutien de l'arête arrière (22) de la partie de toit (2) mobile se produit en continu tant lors du mouvement d'orientation que lors du mouvement de coulissement à l'aide d'un levier d'orientation (40) et que le cache latéral (3) dépendant du soutien de la partie de toit (2) mobile repose en continu, tant lors du mouvement d'orientation que lors du mouvement de coulissement, au niveau d'un joint d'étanchéité (1 A) disposé au niveau d'un bord de l'ouverture de toit (5) et/ou à proximité de l'extrémité supérieure d'un rail de guidage (7).

2. Toit de véhicule selon la revendication 1, **caractérisé en ce que** la partie de toit (4) fixée au moins temporairement présente, dans la zone de bordure latérale, un joint d'étanchéité (4 A) au niveau duquel repose le cache latéral (3) en présence d'un déplacement de la partie de toit (2) vers l'arrière, avec son côté intérieur.

3. Toit de véhicule selon la revendication 1 ou 2, **caractérisé en ce que** le levier d'orientation (40) est disposé directement à côté du côté intérieur du cache latéral (3).

4. Toit de véhicule selon l'une quelconque des revendications précédentes, **caractérisé en ce que** la partie de toit (2) ouvrable est articulée de façon pivotante au niveau d'un levier d'orientation (10) avant pour soulever son arête avant (21), le levier d'orientation (10) étant disposé directement à côté du côté intérieur du cache latéral (3).

5. Toit de véhicule selon l'une quelconque des revendications précédentes, **caractérisé en ce que** la partie de toit (2) mobile est formée par une plaque en verre (2 A) et par une partie formée par injection (2 B) entourant la plaque en verre (2 A) prenant la forme d'un cadre en matière synthétique (2 B) et **en ce que** le cache latéral (3) est formé d'un seul tenant avec la partie formée par injection (2 B) et est encastré dans celle-ci sous la forme d'une pièce moulée.

6. Toit de véhicule selon l'une quelconque des revendications précédentes, **caractérisé en ce que** le cache latéral (3) présente dans sa zone avant une arête inférieure (3 A) tombant en oblique vers l'arrière.

7. Toit de véhicule selon l'une quelconque des revendications précédentes, **caractérisé en ce que** le cache latéral (3) présente dans sa zone arrière un arrondi (3 B) au niveau de son arête inférieure.

8. Toit de véhicule selon l'une quelconque des revendications précédentes, **caractérisé en ce que** le levier d'orientation (40) arrière peut être actionné à l'aide d'un coulisseau de commande (50) comportant au moins une coulisse de commande (54) et pouvant être déplacé dans le rail de guidage (7), le coulisseau de commande (50) étant relié à un câble d'entraînement (9) et une jonction (53) étant réalisée sous le cache latéral (3), entre un canal de câble (8) du rail de guidage (7) guidant le câble d'entraînement (9) et le coulisseau de commande (50).

9. Toit de véhicule selon l'une quelconque des revendications précédentes, **caractérisé en ce que** le coulisseau de commande (50) peut être déplacé dans la même direction en partant de la position de fermeture jusqu'à la position d'ouverture complète en passant par la position d'aération.

10. Toit de véhicule selon l'une quelconque des revendications précédentes, **caractérisé en ce que** la partie de toit (2) mobile fait partie d'un élément fixe de cabriolet pouvant être pivoté et/ou déplacé dans une position de rangement pour libérer entièrement l'habitacle du véhicule.
